# FASCICULE DE BREVET EUROPEEN

(11) **EP 0 767 472 B1**
(45) Date de publication et mention de la délivrance du brevet: **06.03.2002**
(21) Numéro de dépôt: 96410095.2
(22) Date de dépôt: 06.09.1996
(51) Int. Cl.: H01B 19/00

(54) **Procédé de fabrication d'un isolateur et isolateur réalisé selon ce procédé**
Verfahren zur Herstellung eines Isolators und mit diesem Verfahren hergestellter Isolator
Process for manufacturing an insulator and insulator manufactured with this process

(30) Priorité: 04.10.1995 FR 9511888
(43) Date de publication de la demande: 09.04.1997
(73) Titulaire: Schneider Electric Industries SA, 92500 Rueil-Malmaison (FR)
(72) Inventeur: Chappaz, Pierre, 38050 Grenoble Cedex 09 (FR); Fedorenko, Yvan, 38050 Grenoble Cedex 09 (FR); Quenin, Jacques, 38050 Grenoble Cedex 09 (FR); Trichon, François, 38050 Grenoble Cedex 09 (FR); Yvars, Bernard, 38050 Grenoble Cedex 09 (FR)
(74) Mandataire: Ritzenthaler, Jacques

(56) Documents cités:
- WO-A-80/01621
- DE-A- 2 657 051
- DE-A- 2 746 870
- FR-A- 2 672 423
- US-A- 4 312 123

## Description

La présente invention concerne un procédé de fabrication d'un isolateur, notamment d'un isolateur pour un diviseur capacitif ou d'un isolateur de traversée, comportant un noyau central et un corps isolant adapté de manière étanche autour dudit noyau central, une couche de revêtement souple étant interposée entre au moins une partie du noyau central et le corps isolant.

Les isolateurs de ce type sont habituellement fabriqués selon un procédé qui consiste à mouler un corps isolant en résine époxy autour d'un noyau central constitué, par exemple pour un diviseur capacitif, d'un bâtonnet en céramique couplé à ses deux extrémités à deux conducteurs appelés respectivement conducteur haute tension et conducteur basse tension.

Il se trouve que ce procédé est coûteux en raison du coût de la mise en oeuvre, ce qui a pour conséquence de rendre le prix de ces composants relativement élevé.

Le document DE-A-2746870 décrit un procédé de fabrication d'un isolateur dans lequel le noyau en fibre de verre est d'abord recouvert par extrusion d'un revêtement d'élastomère ( caoutchouc, silicone) d'épaisseur comprise entre 1 à 10 mm. Les ailettes sont des pièces préfabriquées, réalisées dans le même matériau que le revêtement souple, et insérées sur ce dernier, l'ensemble étant ensuite soumis à une vulcanisation. Le cycle de fabrication par vulcanisation est long, car il nécessite une préfabrication des ailettes.

Le document US-A-4312123 se rapporte à un procédé de vulcanisation dans lequel les ailettes peuvent être moulées directement sur le revêtement souple et même simultanément avec la même matière.

Le document DE-A- 2657051 décrit un isolateur ayant un noyau sur lequel est moulé directement un corps de résine époxy ou de silicone. Le moulage s'effectue dans une chambre de coulée sous une pression réduite entre 3 à 4 bars. Il n'y a pas de revêtement intermédiaire souple, et le risque de formation de bulles n'est pas à exclure à cause du retrait de réticulation de la résine. Il en résulte un vieillissement prématuré de l'isolateur, avec des possibilités de décharges partielles. Le cycle de fabrication est relativementlong.

Le document FR-A-2672423 mentionne un procédé de fabrication d'isolateurs par moulage, dans lequel un noyau central en composite est surmoulé d'un corps extérieur en élastomère polymérisable. Il n'y a pas de revêtement intermédiaire souple.

Le document WO 80/01621 décrit un isolateur comprenant un noyau isolant revêtu d'une première couche intermédiaire de silicone et d'une deuxième couche de graisse synthétique, sur laquelle est rapporté le corps des ailettes. Le corps n'est pas fabriqué par injection sous haute pression de résine.

La présente invention se propose de réaliser ce type d'isolateurs à un coût sensiblement inférieur à celui qui a cours actuellement, par une fabrication plus rapide, avec des matériaux et des outillages moins chers, tout en préservant les qualités d'isolationdiélectrique.

A cet effet, le procédé de fabrication selon l'invention est caractérisé par les étapes suivantes:
- la couche de revêtement souple est réalisée par surmoulage d'au moins une partie du noyau central avec une matière élastomère adhérant au noyau, ladite couche étant notamment constituée de polyuréthane souple, ou de silicone, et présentant une épaisseur comprise entre 0,75 et 1,5 mm;
- le corps isolant est réalisé par surmoulage dans un moule à injection dudit noyau central préalablement enrobé dans ladite couche de revêtement souple avec une résine isolante injectée sous une pression supérieure à 50 bars, de manière à comprimer la couche de revêtement souple, laquelle comble par la suite les retassures pour compenser l'effet de retrait de la matière injectée lors de son passage de l'état fluide vers l'état solide, notamment au niveau des ailettes du corps isolant,
- la résine dudit corps étant une résine injectable thermoplastique ou thermodurcissable, ayant un retrait au moulage supérieure à 1%.

Selon une caractéristique de l'invention, la couche de revêtement souple est obtenue par coulée de ladite matière élastomère dans un moule préchauffé à une température supérieure à 30°C, et de préférence voisine de 60°C.

Selon une autre caractéristique de l'invention, le noyau central préalablement enrobé dans la couche de revêtement souple, est préchauffé avant l'injection de la résine, la température de préchauffage étant supérieure à 50°C et de préférence voisine de 70°C.

La présente invention sera mieux comprise en référence à la description d'un mode de réalisation préféré donné à titre d'exemple non limitatif et aux dessins annexés dans lesquels :
- La figure 1 représente une vue en coupe axiale d'un isolateur connu illustrant l'art antérieur,
- La figure 2 représente une vue de côté du noyau central d'un isolateur selon l'invention,

-- La figure 3 représente une vue de côté du noyau central d'un isolateur selon l'invention, illustrant une première phase du procédé selon l'invention, et

- La figure 4 représente une vue en coupe axiale d'un isolateur condensateur selon l'invention.

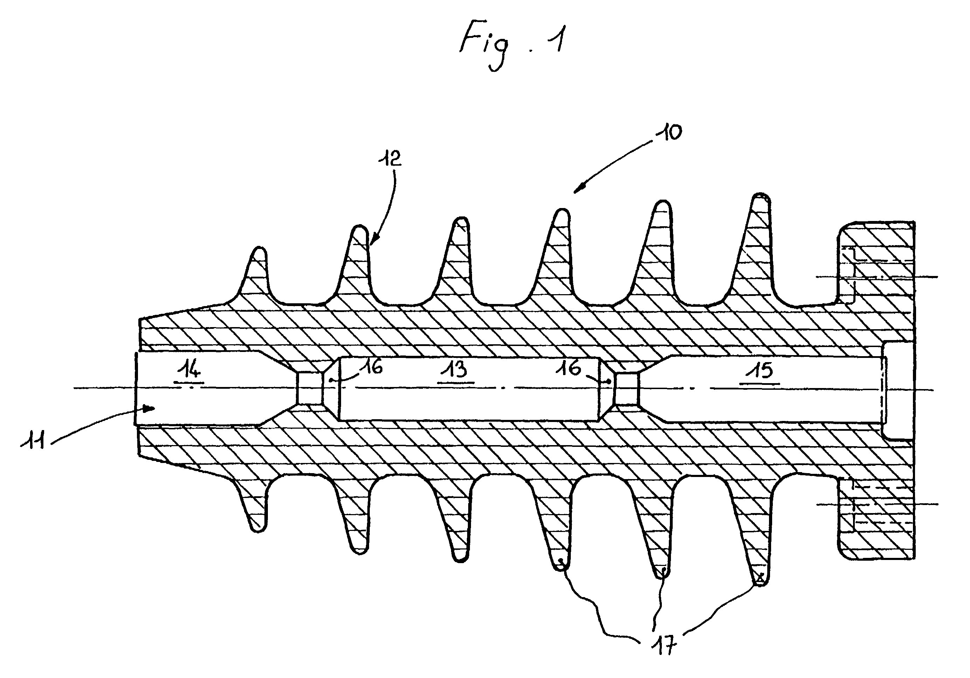

En référence à la figure 1, l'isolateur 10 selon l'art antérieur tel que représenté comporte principalement un noyau central 11 entouré d'un corps isolant 12. Le noyau central 11 se compose d'un insert constitué d'un bâtonnet en céramique 13 occupant une position centrale et qui est couplé par ses extrémités à deux conducteurs respectivement 14 et 15. Le conducteur 14 est, dans ce cas qui représente un diviseur capacitif, le conducteur haute tension, et le conducteur 15 est le conducteur basse tension. La liaison entre le bâtonnet de céramique et les conducteurs est réalisée par brasage de capuchons métalliques 16 sur les extrémités du bâtonnet de céramique. Le corps isolant 12 est une pièce en résine époxy surmoulée sur le noyau central 11. Il comporte une série d'ailettes 17 destinées à augmenter la ligne de fuite de l'isolateur.

Ce principe de construction s'applique actuellement à tous les dispositifs dans lesquels il existe un besoin d'étanchéité diélectrique, notamment les diviseurs capacitifs, les diviseurs résistifs ou les isolateurs de traversée. Pour augmenter les performances diélectriques de l'insert seul ou afin d'étendre les conditions d'utilisation par exemple dans des milieux pollués, humides ou à basse pression, cet insert est enrobé d'une matière isolante, quelle que soit d'ailleurs la nature de l'insert qui peut être métallique, en céramique ou en matière plastique. Dans le cas décrit ci-dessus, où l'insert est en céramique, ce dernier fait office de condensateur. La rigidité diélectrique de la céramique est suffisante pour supporter toutes les surtensions qui peuvent lui être appliquées pendant toute sa durée de vie. Toutefois, il y a un risque de contournement dans l'air de la céramique, car la rigidité diélectrique de l'air est trop faible pour supporter de telles surtensions sur une aussi courte distance.

De plus, lorsque l'insert est placé dans l'air ambiant, des particules conductrices (poussières) peuvent se déposer sur la surface de la céramique et peuvent, de ce fait, être à l'origine d'un contournement en l'absence de surtension. C'est pour pallier ces problèmes que l'on enrobe l'insert dans une matière isolante, ce qui présente les avantages suivants :
a. par un dimensionnement adéquat, la distance de contournement de l'ensemble dans l'air est augmentée de façon que cet ensemble puisse supporter toutes les surtensions possibles;
b. par un dimensionnement adéquat du profil du corps isolant, définissant les lignes de fuite, le risque de diminution de la tenue diélectrique au contournement peut être jugulé même en cas de dépôt de particules conductrices;
c. par un choix judicieux de la matière qui compose le corps isolant, on rend l'isolateur apte à supporter des efforts mécaniques que le corps central n'est pas apte à supporter, notamment parce que les zones de jonction entre les cylindres métalliques qui constituent les conducteurs et le bâtonnet de céramique sont fragiles.

Le problème principal qui est à résoudre au niveau de l'enrobage de l'insert est que la matière d'enrobage doit coller à l'insert et assurer une étanchéité au niveau de son interface avec la céramique pour qu'il ne puisse pas y avoir une amorce de contournement.

En effet, dès que l'étanchéité n'est pas complète, il y a présence d'air au niveau de cette zone, ce qui peut réduire la rigidité diélectrique de l'ensemble et diminuer sa durée de vie.

D'une manière classique, l'enrobage de l'insert est réalisé en résine thermodurcissable, notamment en résine époxy, pour les applications à haute tension. Néanmoins, on peut également utiliser des corps isolants réalisés en silicone ou en polyuréthane. Toutes ces matières sont choisies parce qu'elles collent généralement bien à l'insert, ce qui garantit une bonne étanchéité diélectrique.

Dans la pratique, l'assemblage des conducteurs et du bâtonnet de céramique, en d'autres termes le noyau central, est préchauffé à plus de 140°C puis est placé dans un moule porté à une température de l'ordre de 80°C. La résine époxy est injectée dans le moule à faible pression, soit environ 1 à 2 bars, pour remplir progressivement l'espace entre la paroi interne du moule et le noyau central. La résine a une température voisine de 70°C. Du fait de la différence de température entre la paroi du moule et du noyau central, la polymérisation s'effectue en priorité le long du noyau central. Il en résulte simultanément un collage effectif de la résine sur le noyau central et notamment sur l'insert en céramique et un frettage dû au retrait de la résine qui se réticule. On obtient de ce fait une bonne étanchéité diélectrique.

Le procédé présente toutefois des inconvénients. La présence de bulles n'est pas totalement exclue, ces bulles pouvant être le siège de décharges partielles. Ces bulles peuvent être dues au retrait de la matière au cours du processus de réticulation ou à un emprisonnement d'air lors du moulage. Les décharges partielles peuvent entraîner un vieillissement prématuré de l'isolateur. Il est nécessaire de contrôler toutes les pièces fabriquées en les soumettant à des tests de décharges partielles, ce qui a pour conséquence d'augmenter la durée du cycle de fabrication. Par ailleurs, ce cycle de fabrication est long, puisqu'il dure environ 20 minutes, ce qui oblige le constructeur à multiplier le nombre des outillages en compensant ainsi la longueur du cycle de production par l'utilisation d'outillages à empreintes multiples.

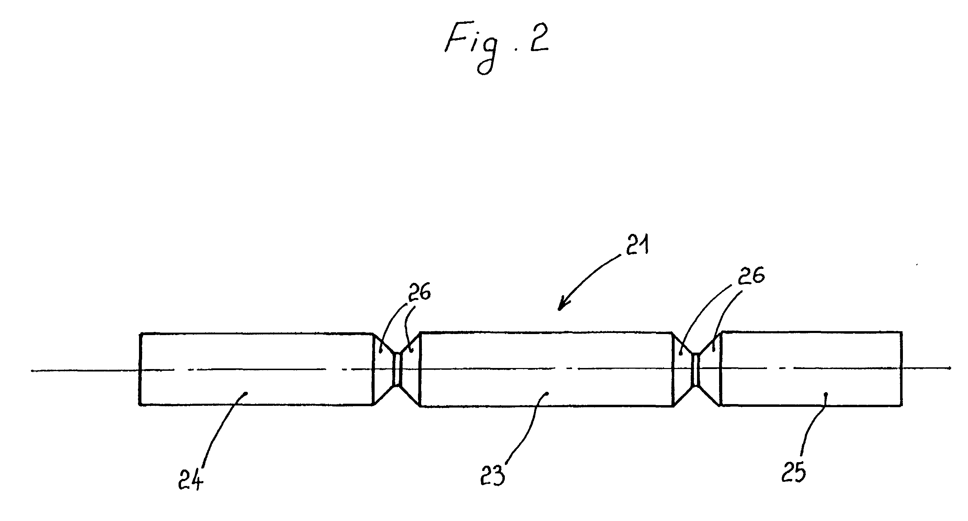

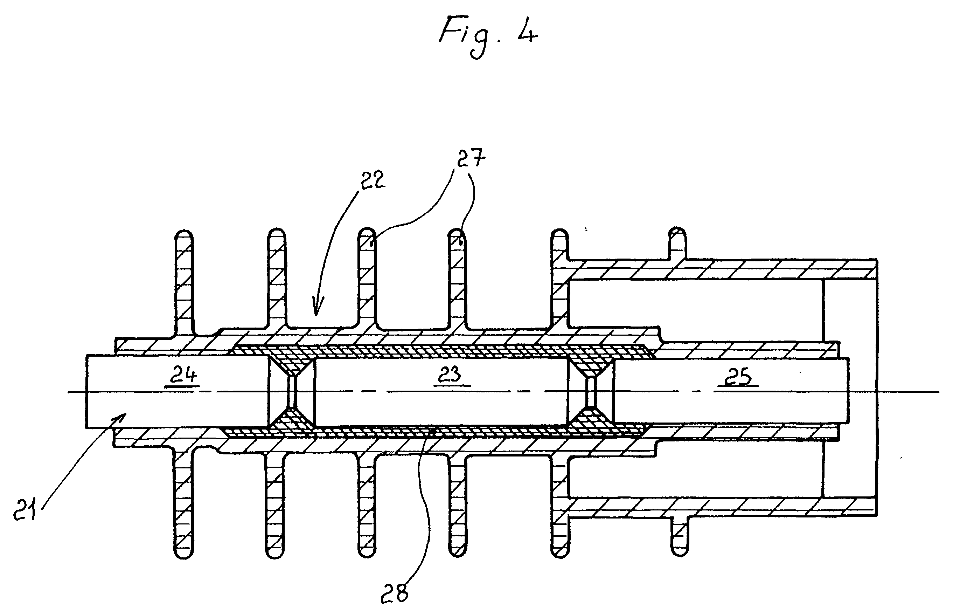

La figure 2 représente plus spécifiquement le noyau central 21 d'un isolateur. Ce noyau central est identique à celui décrit en référence à la figure 1 et correspond à un isolateur de l'art antérieur et à celui selon l'invention qui sera décrit par la suite en référence à la figure 4. Il comporte un insert 23 constitué par un bâtonnet en céramique et deux conducteurs 24 et 25 constitués par deux cylindres métalliques. Ces trois composants sont assemblés au moyen de pièces d'extrémité tronconiques 26, la liaison céramique-métal étant assurée par brasage ou tout procédé d'assemblage permettant le passage du courant. L'insert en céramique constitue le condensateur à haute tension. Le conducteur 24, qui correspond à l'entrée haute tension, est de préférence réalisé en acier revêtu, et le conducteur 25, qui correspond à la basse tension, est de préférence réalisé en aluminium ou en laiton. Les pièces d'extrémité 26 sont de préférence en laiton pouvant être brasé sur la céramique.

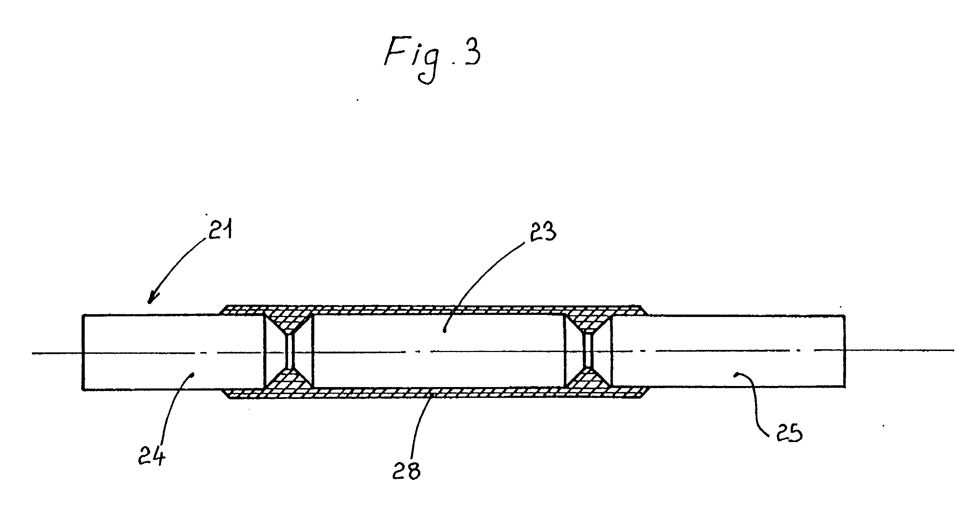

La figure 3 illustre l'étape suivante du procédé de fabrication de l'isolateur selon l'invention. Cette étape consiste à enrober l'insert constitué par le bâtonnet en céramique 23 par une couche de revêtement souple 28. Cette opération se fait par surmoulage à l'aide d'une matière élastomère telle que par exemple un polyuréthane souple, un silicone ou similaires. Ce surmoulage peut se faire sous la forme d'un moulage par coulée dans un moule préchauffé, porté à une température supérieure à 30°C et de préférence à environ 60°C, de polyuréthane bicomposant de dureté inférieure à 80 shore A. Le bâtonnet enrobé, comme le montre la figure, avec des sections d'extrémité qui se prolongent sur les conducteurs, est sorti du moule et les carottes de coulée et de dégazage sont coupées à ras.

L'étape suivante de ce procédé de fabrication, illustrée par la figure 4, consiste à surmouler le noyau central préalablement enrobé de la couche de revêtement souple 28. Ce composant est préchauffé à une température supérieure à 50°C et de préférence voisine de 70°C, puis placé dans un moule à injection dont la cavité a la forme du corps isolant 22. La matière utilisée pour réaliser le corps isolant est une résine thermoplastique injectable tel que par exemple du polypropylène.
Une autre résine isolante injectée à temps de cycle faible, même thermodurcissable, peut bien entendu être utilisée, notamment du polyester.
Cette matière est injectée à une pression supérieure à 50 bars et de préférence d'environ 100 bars pendant une durée d'environ 5 secondes. La pression de maintien est de l'ordre de 400 bars et la durée de maintien est approximativement de 20 secondes. La température de la matière injectée est de l'ordre de 180 à 200°C pour le cas du polypropylène.

Après ce temps de maintien, le moule est ouvert et les carottes de moulage sont coupées.

Comme pour l'isolateur de l'art antérieur, le corps isolant 22 assure l'augmentation des lignes de fuite.

Le surmoulage de l'insert pour réaliser la couche de revêtement souple 28 assure l'étanchéité diélectrique de l'isolateur. Enfin, la solidité mécanique et la fixation de l'isolateur sont également assurées par le corps isolant.

Lors de l'injection sous pression élevée de la matière composant le corps isolant, la couche de revêtement souple 18 est comprimée. Le passage de l'état fluide de la matière injectée à son état solide entraîne un retrait sous forme de retassures au niveau des ailettes 27 de ce corps et une diminution du diamètre interne du corps isolant 22. Grâce à sa souplesse, la couche de revêtement souple comble les retassures et compense l'effet de retrait de la matière injectée, ceci parce qu'elle a été comprimée à l'injection et que la diminution du diamètre interne du corps comprime l'élastomère, autorisant le remplissage des vides créés par le retrait au niveau des aillettes. L'épaisseur de la couche de revêtement souple doit être sensiblement comprise entre 0,75 et 1,5 mm, et le retrait de la matière injectée doit être supérieur à 1%.

## Revendications

1. Procédé de fabrication d'un isolateur, notamment d'un isolateur pour un diviseur capacitif ou d'un isolateur de traversée, comportant un noyau central et un corps isolant adapté de manière étanche autour dudit noyau central, une couche de revêtement souple (28) étant interposée entre au moins une partie du noyau central (21) et le corps isolant (22),
**caractérisé par** les étapes suivantes:
- la couche de revêtement souple (28) est réalisée par surmoulage d'au moins une partie du noyau central avec une matière élastomère adhérant au noyau, ladite couche étant notamment constituée de polyuréthane souple, ou de silicone, et présentant une épaisseur comprise entre 0,75 et 1,5 mm;
- le corps isolant (22) est réalisé par surmoulage dans un moule à injection dudit noyau central (21) préalablement enrobé dans ladite couche de revêtement souple (28) avec une résine isolante injectée sous une pression supérieure à 50 bars, de manière à comprimer la couche de revêtement souple (28), laquelle comble par la suite les retassures pour compenser l'effet de retrait de la matière injectée lors de son passage de l'état fluide vers l'état solide, notamment au niveau des ailettes (27) du corps isolant (22),
- la résine dudit corps (22) étant une résine injectable thermoplastique ou thermodurcissable, ayant un retrait au moulage supérieur à 1%.

2. Procédé selon la revendication 1, **caractérisé en ce que** la couche de revêtement souple (28) est obtenue par coulée de ladite matière élastomère dans un moule préchauffé à une température supérieure à 30°C, et de préférence voisine de 60°C.

3. Procédé selon la revendication 1, **caractérisé en ce que** le noyau central préalablement enrobé dans la couche de revêtement souple (28) , est préchauffé avant l'injection de la résine, la température de préchauffage étant supérieure à 50°C et de préférence voisine de 70°C.

## Claims

1. A manufacturing process of an insulator, in particular an insulator for a capacitive divider or a bushing insulator, comprising a central core and an insulating body fitted tightly around said central core, a flexible coating layer (28) being interposed between at least a part of the central core (21) and the insulating body (22),
**characterized by** the following stages:
- the flexible coating layer (28) is achieved by overmoulding of at least a part of the central core with an elastomer material adhering to the core, said layer being notably formed by flexible polyurethane, or by silicone, and presenting a thickness comprised between 0.75 and 1.5 mm;
- the insulating body (22) is achieved by overmoulding in an injection mould of said central core (21) previously coated in said flexible coating layer (28) with an insulating resin injected under a pressure greater than 50 bars, so as to compress the flexible coating layer (28) which subsequently fills in the shrinkage cavities to compensate the retraction effect of the injected material when changing from fluid state to solid state, in particular at the level of the fins (27) of the insulating body (22);
- the resin of said body (22) being an injectable thermoplastic or thermosetting resin having a retraction on moulding of more than 1%.

2. The process according to claim 1, **characterized in that** the flexible coating layer (28) is obtained by casting of said elastomer material in a mould preheated to a temperature greater than 30°C, and preferably about 60°C.

3. The process according to claim 1, **characterized in that** the central core previously coated in the flexible coating layer (28) is preheated before injection of the resin, the preheating temperature being greater than 50°C and preferably about 70°C.

## Patentansprüche

1. Verfahren zur Herstellung eines Isolators, insbesondere eines Isolators für einen kapazitiven Spannungsteiler oder eines Durchführungsisolators, mit einem Mittelkern und einem auf den genannten Mittelkern aufgebrachten, diesen dicht umschließenden Isolierkörper, wobei zwischen mindestens einen Teil des Mittelkerns (21) und den Isolierkörper (22) eine flexible Überzugschicht (28) eingebracht ist,
**dadurch gekennzeichnet, daß** es folgende Teilschritte umfaßt:
- Die flexible Überzugschicht (28) wird durch Anformen eines am Kern haftenden Elastomers an mindestens einen Teils des Mittelkerns hergestellt, wobei die genannte Schicht insbesondere aus einem flexiblen Polyurethan oder aus Silikon besteht und eine Dicke zwischen 0,75 und 1,5 mm aufweist;
- Der Isolierkörper (22) wird durch Einspritzen eines Isolierharzes unter einem Druck von mehr als 50 bar in eine Spritzform auf den genannten, zuvor mit der genannten flexiblen Überzugsschicht (28) versehenen Mittelkern (21) aufgebracht, derart daß die flexible Überzugsschicht (28) komprimiert wird und dadurch Einsackungen ausfüllt, um besonders im Bereich der Schirme (27) des Isolierkörpers (22) die beim Übergang vom flüssigen in den festen Zustand eingetretene Schwindung des Spritzwerkstoffs auszugleichen;
- Bei dem für den genannten Körper (22) verwendeten Harz handelt es sich um ein spritzfähiges thermoplastisches oder warmaushärtendes Harz mit einer Verarbeitungsschwindung von über 1 %.

2. Verfahren nach Anspruch 1, **dadurch gekennzeichnet, daß** die flexible Überzugsschicht (28) durch Eingießen des genannten Elastomers in eine auf über 30 °C, vorzugsweise etwa 60 °C vorgeheizte Gießform hergestellt wird.

3. Verfahren nach Anspruch 1, **dadurch gekennzeichnet, daß** der zuvor mit der flexiblen Überzugsschicht (28) versehene Mittelkern vor dem Einspritzen des Harzes vorgeheizt wird, wobei die Vorheiztemperatur mehr als 50°C, vorzugsweise etwa 70 °C beträgt.
